Europäisches Patentamt

European Patent Office

Office européen des brevets

(19)

(11) Veröffentlichungsnummer: **0 244 001 B1**

(12) **EUROPÄISCHE PATENTSCHRIFT**

(45) Veröffentlichungstag der Patentschrift: **05.01.94**

(51) Int. Cl.⁵: **H04N 7/13,** H04N 7/133

(21) Anmeldenummer: **87200651.5**

(22) Anmeldetag: **07.04.87**

(54) **Hybrid-Codierer für Videosignale.**

(30) Priorität: **19.04.86 DE 3613343**
**18.06.86 DE 3620424**
**08.11.86 DE 3638128**

(43) Veröffentlichungstag der Anmeldung:
**04.11.87 Patentblatt 87/45**

(45) Bekanntmachung des Hinweises auf die
Patenterteilung:
**05.01.94 Patentblatt 94/01**

(84) Benannte Vertragsstaaten:
**DE FR GB IT SE**

(56) Entgegenhaltungen:
**DE-A- 2 703 909**

**PROCEEDINGS OF THE IEEE. vol. 73, no. 4,
April 1985, NEW YORK US pages 671 -688; H.
SABRI ET AL.: "VIDEO CONFERENCING SY-
STEMS"**

(73) Patentinhaber: **Philips Patentverwaltung
GmbH
Wendenstrasse 35c
D-20097 Hamburg(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT SE**

(72) Erfinder: **Speidel, Joachim, Dr.-Ing.
Osternoherstrasse 19
D-8500 Nürnberg(DE)**
Erfinder: **Vogel, Peter, Dipl.-Ing.
Wöhrletstrasse 7a
D-8566 Diepersdorf(DE)**

(74) Vertreter: **Peuckert, Hermann, Dipl.-Ing. et al
Philips Patentverwaltung GmbH,
Wendenstrasse 35c
D-20097 Hamburg (DE)**

EP 0 244 001 B1

EP 0 244 001 B1

## Beschreibung

Die Erfindung bezieht sich auf einen Hybrid-Codierer für Videosignale
- mit einer Funktionseinheit Zur Unterteilung der Daten eines Videobildes in gleich große Datenblöcke,
- mit einem Subtrahierer zur Subtraktion jedes von der Funktionseinheit gelieferten Datenblockes von einem entsprechenden, über einen Rückkopplungsweg geführten ans dem vorherigen Videobild abgeleiteten Datenblock,
- mit einer ersten Operationseinheit zur Durchführung einer Cosinus-Transformation, die mit dem Ausgang oder dem Eingang des ein Differenzbild liefernden Subtrahierers gekoppelt ist,
- mit einem im Rückkopplungsweg enthaltenen zur Speicherung von Datenblöcken vorgesehenen Bildspeicher, der einerseits mit dem Subtrahierer und andererseits mit einem Addierer zur Addition der über den Rückkopplungsweg gegebenen Datenblöcke mit entsprechenden aus dem Bildspeicher abgeleiteten Datenblöcken gekoppelt ist.

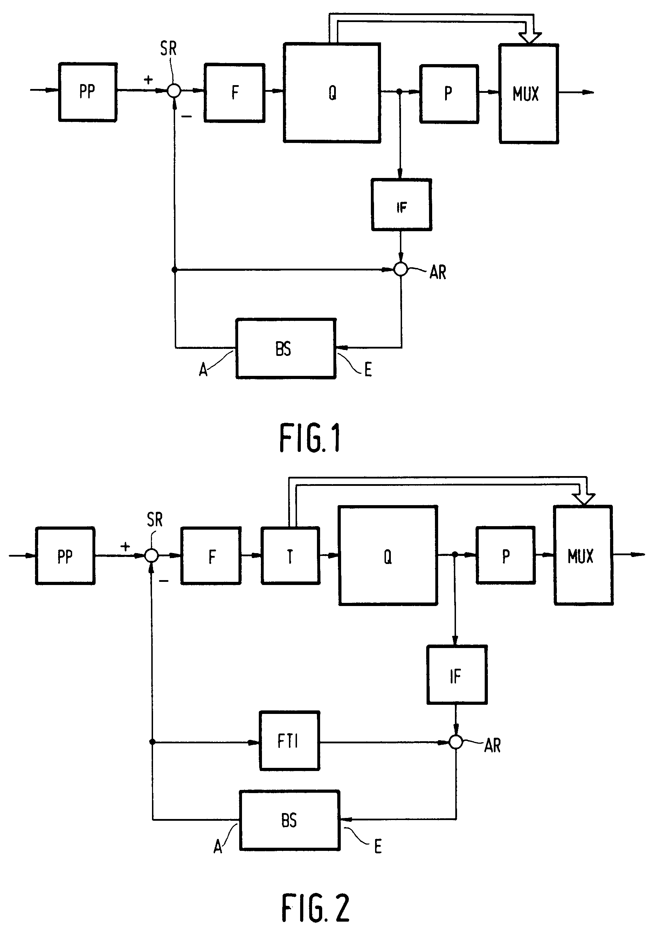

Ein Hybrid-Codierer mit den angegebenen Merkmalen ist in einem Tagungsbericht (Draft version Document Sim 85/78 Report COST 211 bis Simulation Subgroup Meeting, Stockholm, 10. bis 11. Dezember 1985) der COST-Gruppe beschrieben. Ein Prinzipschaltbild des bekannten Hybrid-Codierers ist in Fig. 1 dargestellt. Der Hauptzweck des gezeigten Codierers ist der, die von einer Video-Datenquelle kommenden Videodaten möglichst mit geringem Informationsverlust in ein Signal mit möglichst geringer Bitrate umzucodieren.

Bei diesem Vorgang werden zwei Codierungsprinzipien - daher der Name Hybrid-Codierer - angewendet:

Das Interframe-Prinzip, bei dem die Korrelation zwischen zeitlich aufeinanderfolgenden Videobildern (diese Bezeichnung wird hier für Voll- und Teilbilder verwendet) ausgenutzt wird, und das Intraframe-Prinzip, bei dem die Korrelation der Videodaten innerhalb eines Videobildes ausgenutzt wird.

Vor dem eigentlichen Codierungsprozeß ist eine Aufbereitung der Daten erforderlich. Diese Aufbereitung wird bei dem Hybrid-Codierer nach Fig. 1 durch eine Funktionseinheit PP (preprocessing) übernommen. Die Daten werden in Blöcken an den Codierer übergeben. Ein solcher Videodatenblock enthält die Daten bestimmter Bildpunkte eines Videobildes, die als Elemente einer quadratischen Zahlenmatrix aufgefaßt werden (zur Bedeutung der hier verwendeten Begriffe im Zusammenhang mit Zahlenmatritzen vgl. Wigner, E.P.: Group Theory; Academic Press New York and London 1959, Seite 1 bis 30). So kann z.B. ein Datenblock aus den Chrominanzwerten der ersten acht Bildpunkte der ersten acht Zeilen eines Videobildes bestehen. Durch die Funktionseinheit PP wird jedes Videobild in gleich große Datenblöcke zerlegt. Die Zerlegungsvorschrift enthält auch die Zuordnung einer Kennung zu jedem Datenblock. Der eben als Beispiel angeführte Datenblock könnte z.B. durch $\mathbf{b}_{11}$ symbolisiert und gekennzeichnet werden. Datenblöcke von aufeinanderfolgenden Videobildern, die die gleiche Kennung haben, werden hier als sich entsprechende Datenblöcke bezeichnet.

Mit der gleichen Bezeichnung sollen auch Datenblöcke aufeinanderfolgender Videobilder gemeint sein, deren Informationsinhalte die größte Übereinstimmung haben. In diesem Sinne sich entsprechende Datenblöcke spielen bei Hybrid-Codierern eine Rolle, bei denen ein sogenanntes Clockmatching vorgenommen wird. Auf diese Variante von Hybrid-Codierern soll jedoch nicht näher eingegangen werden.

Bei der Übergabe eines Datenblockes, z.B. des Datenblockes $\mathbf{b}_{11}$ an einen Eingang eines Subtrahierers SR, wird gleichzeitig der entsprechende Datenblock - symbolisiert z.B. durch $\underline{\mathbf{b}}_{11}$ - des vorangegangenen Videobildes aus einem Bildspeicher BS an den anderen Eingang des Subtrahierers SR gegeben. Der Subtrahierer SR bildet die Differenz zwischen den beiden Blöcken im Sinne der Differenz zwischen zwei Matritzen (vgl. Wigner l.c., Seite 7); dieser Differenzblock wird nun weiteren Operationen unterworfen.

Eine erste Operationseinheit F nimmt mit jedem Differenzblock eine Ähnlichkeitstransformation im Sinne einer Matrixtransformation vor (vgl. Wigner l.c., Seite 9). Sei a das Symbol für die Transformationsmatrix der Einheit F und $\mathbf{d}_{11}$ das Symbol für die Matrix des Differenzblockes - oder einfacher für den Differenzblock - so liegt nach der Transformation am Ausgang der Einheit F der Block $\mathbf{D}_{11} = \mathbf{a}^{-1} \mathbf{d}_{11} \mathbf{a}$ an, wobei $\mathbf{a}^{-1}$ das Symbol für die zu $\mathbf{a}$ inverse Matrix bedeutet. Die Transformation durch die Einheit F entspricht etwa der Fourier-Transformation (genauer gesagt handelt es sich um eine spezielle flächenhafte Fourier-Transformation) bei der akustischen Signalübertragung: der Block $\mathbf{D}_{11}$ kann meist mit weniger Binärstellen codiert werden als der Block $\mathbf{d}_{11}$.

Anschließend durchläuft das transformierte Signal einen Quantisierer Q, der nochmals für eine Datenreduktion sorgt. Damit das gesamte Signal mit konstanter Bitrate an einen Empfänger übertragen werden kann, ist ein Pufferspeicher P vorgesehen. Ein Multiplexer MUX verschachtelt das aus dem Pufferspeicher P ausgelesene Nutzsignal mit Steuerinformationen, die im vorliegenden Falle unter anderem zur Einstellung eines Quantisierers auf der Empfängerseite dienen (es handelt sich hier um adaptive Quantisierer). Nach

2

der Quantisierung wird das Signal auch über einen Rückkopplungsweg an den Eingang des Hybrid-Codierers zurückgeschleift. Zunächst wird der durch den Quantisierer Q veränderte Block $\mathbf{D}_{11}$ durch eine nicht eingezeichnete Regenerationseinheit so weit regeneriert, daß er bis auf Rundungsfehler mit dem ursprünglichen Block $\mathbf{D}_{11}$ übereinstimmt. Sodann wird er durch eine zweite Operationseinheit IF mit der Transformationsmatrix $\mathbf{a}^{-1}$ wieder in den Differenzblock $\mathbf{d}_{11}$ (ebenfalls bis auf Rundungsfehler) zurücktransformiert. Ein Addierer AR addiert zu diesem Block - wegen der Verbindung eines Ausganges A des Bildspeichers BS mit einem Eingang des Addierers AR - den Datenblock $\underline{\mathbf{b}}_{11}$, mit dem durch den Subtrahierer SR der Differenzblock $\mathbf{d}_{11}$ gebildet wurde. Eventuelle Verzögerungen wegen endlicher Laufzeiten werden entweder durch Verzögerungsglieder oder Taktverschiebungen (beides in Fig. 1 nicht angedeutet) ausgeglichen.

Wie sich leicht überprüfen läßt, ergibt sich am Ausgang des Addierers AR der Datenblock $\mathbf{b}_{11}$ (bis auf Rundungsfehler) des gerade über die Funktionseinheit PP zugeführten Videobildes. Dieser Datenblock wird über einen Eingang E des Bildspeichers BS in ihn eingelesen und übernimmt dort die Rolle des Datenblockes $\underline{\mathbf{b}}_{11}$, der nun gelöscht wird.

Bei dem bekannten Hybrid-Codierer hängt die Bitratenreduktion entscheidend von der Ausgestaltung des Quantisierers Q ab. Sind die Quantisierungsintervalle groß, gilt das zwar auch für die Bitratenreduktion, jedoch vermindert sich die Bildqualität in besonders störender Weise durch die hohen Quantisierungsfehler. Es kann z.B. auf dem Bildschirm ein schachbrettartiges Muster entstehen, das von der Aufteilung eines Videobildes in Blöcke herrührt oder es entstehen und vergehen ständig wechselnde Strukturen (Artefakte), die zur völligen Entstellung des wiedergegebenen Bildes führen können.

Um den Quantisierungsfehler wenigstens bei empfindlichen Signalanteilen zu verringern, werden z.B. adaptive Quantisierer verwendet, also Quantisierer, deren Kennlinie durch das Videosignal verändert wird. Der Aufwand ist unter anderem deshalb erheblich, weil zusätzliche Informationen über den Zustand des Quantisierers an den Empfänger übertragen werden müssen.

Die von der Funktionseinheit PP und von dem Bildspeicher BS (vgl. Fig. 1) kommenden Datenblöcke werden - wie oben erwähnt - einer speziellen, flächenhaften Fourier-Transformation (Cosinus-Transformation) unterzogen. Bei empirischen Untersuchungen hat sich herausgestellt, daß zwischen den Koeffizienten, die zu hohen Frequenzen (besser: Wellenzahlen) und sich einander entsprechenden Datenblöcken gehören nur eine geringe Korrelation besteht. Die hohen Frequenzanteile der Datenblöcke, die von der Funktionseinheit PP kommen, sind also statistisch unabhängig von den hohen Frequenzanteilen der Datenblöcke, die vom Bildspeicher BS kommen. Da jedoch der Subtrahierer SR die Differenz beider Datenblöcke bildet, und der Differenzblock durch die Operationseinheit F cosinustransformiert wird, ergeben sich für die hohen Frequenzanteile der Differenzblöcke - wegen der statistischen Unabhängigkeit der Summanden - größere Werte als für jeden der Datenblöcke alleine. Es ergibt sich hierdurch eine Verschlechterung der Bildqualität.

Der Erfindung liegt daher die Aufgabe zugrunde, einen Hybrid-Codierer der eingangs genannten Art zu schaffen, durch den eine verbesserte Bildqualität erreicht wird.

Diese Aufgabe wird dadurch gelöst, daß mit dem Bildspeicher Mittel gekoppelt sind, die zur Durchführung einer Matrixoperation mit Tiefpaßcharakter der von dem Bildspeicher gelieferten Datenblöcke vorgesehen ist.

Fin solches Mittel kann eine Tiefpaßeinheit zur Durchführung einer Matrixoperation mit Tiefpaßcharakter sein, die unmittelbar mit dem Ausgang oder Eingang des Bildspeichers verbunden ist. Die Tiefpaßeinheit dämpft die hohen Frequenzanteile der Datenblöcke, die aus dem Bildspeicher oder dem Addierer kommen. Hierdurch wird die Bildqualität auf der Empfängerseite verbessert, weil für die Codierung auf der Senderseite ungeeignete Bildanteile nicht mehr verwendet werden. Das führt unter anderem zu einer geringeren Zahl der für die Codierung der Differenzblöcke erforderlichen Bits.

Als Mittel kann auch eine Einheit vor bzw. hinter der Operationseinheit zur Durchführung einer Cosinus-Transformation und eine Operationseinheit zwischen Bildspeicher und Addierer angeordnet sein.

In einer Weiterbildung der Erfindung ist vorgesehen, daß eine mit der ersten, dem Subtrahierer nachgeschaltete Operationseinheit gekoppelte, im Rückkopplungsweg enthaltene zweite Operationseinheit zur Durchführung einer inversen Cosinus-Transformation vor dem Addierer angeordnet ist, daß zwischen Addierer und dem Eingang des Bildspeicher oder unmittelbar hinter dem Ausgang des Bildspeichers eine Tiefpaßeinheit angeordnet ist und daß zwischen der Funktionseinheit zur Unterteilung der Daten eines Videobildes in gleich große Datenblöcke und dem Subtrahierer eine weitere Tiefpaßeinheit zur Durchführung einer Matrixoperation mit Tiefpaßcharakter der Datenblöcke des Videobildes angeordnet ist.

Hierbei dient die weitere Tiefpaßeinheit zur Bandbegrenzung der von der Funktionseinheit kommenden Datenblöcke. Die Tiefpaßwirkung der Tiefpaßeinheit, die zwischen der Funktionseinheit und dem Subtrahierer liegt, ist dabei geringer als die Tiefpaßwirkung der Tiefpaßeinheit, die unmittelbar hinter dem Ausgang des Bildspeichers angeordnet ist. Die Bandbegrenzung der von der Funktionseinheit kommenden Datenblöcke reduziert das störende Quantisierungsrauschen auf Kosten der Bildschärfe (Unschärfe). Eine solche Unschärfe ist jedoch weniger störend als die eingangs genannten Störungen aufgrund des Quantisierungsfehlers.

In einer anderen Weiterbildung der Erfindung ist vorgesehen, daß eine mit der ersten, dem Subtrahierer nachgeschaltete Operationseinheit gekoppelte, im Rückkopplungsweg enthaltene zweite Operationseinheit zur Durchführung einer inversen Cosinus-Transformation vor dem Addierer angeordnet ist, daß direkt hinter der ersten Operationseinheit eine Tiefpaßeinheit angeordnet ist und daß vor dem Addierer eine vierte Operationseinheit zum Empfang der Datenblöcke vom Bildspeicher, zur Durchführung einer Matrixoperation mit Tiefpaßcharakter der vom Bildspeicher gelieferten Datenblöcke und zur Lieferung der gefilterten Datenblöcke an den Addierer angeordnet ist.

Die hohen Frequenzanteile der Datenblöcke vom Bildspeicher werden durch die Tiefpaßeinheit und die vierte Operationseinheit gedämpft. Zusätzlich bewirkt die Tiefpaßeinheit auch eine Bandbegrenzung der von der Funktionseinheit stammenden Datenblöcke. Hierdurch wird ebenfalls das störende Quantisierungsrauschen auf Kosten der Bildschärfe reduziert.

Als Matrix für die Tiefpaßeinheit, die zur Durchführung einer Matrixoperation mit Tiefpaßcharakter vorgesehen ist, kann eine Diagonalmatrix dienen.

Weiter ist auch möglich, daß die Matrizen der Tiefpaßeinheit und der vierten Operationseinheit adaptiv verändert werden.

In einer weiteren Fortbildung der Erfindung ist vorgesehen, daß eine mit der ersten, dem Subtrahierer nachgeschaltete Operationseinheit gekoppelte, im Rückkopplungsweg enthaltene zweite Operationseinheit zur Durchführung einer inversen Cosinus-Transformation vor dem Addierer angeordnet ist, daß zwischen dem Subtrahierer und der ersten Operationseinheit eine Tiefpaßeinheit angeordnet ist und daß vor dem Addierer eine weitere Operationseinheit zum Empfang der Datenblöcke vom Bildspeicher, zur Durchführung einer Matrixoperation mit Tiefpaßcharakter der vom Bildspeicher gelieferten Datenblöcke und zur Lieferung der gefilterten Datenblöcke an den Addierer angeordnet ist.

Die hohen Frequenzanteile der Datenblöcke vom Bildspeicher werden durch die Tiefpaßeinheit und die weitere Operationseinheit gedämpft. Zusätzlich bewirkt die Tiefpaßeinheit auch eine Bandbegrenzung der von der Funktionseinheit stammenden Datenblöcke. Hierdurch wird ebenfalls das störende Quantisierungsrauschen auf Kosten der Bildschärfe reduziert.

Die Wirkungsweise der Operationseinheiten mit Tiefpaßcharakter wird dabei in Abhängigkeit vom Füllstand eines mit dem Ausgang der ersten Operationseinheit gekoppelten Pufferspeichers oder in Abhängigkeit vom Displacement-Vektor oder in Abhängigkeit von beidem verändert.

In einer anderen Weiterbildung der Erfindung ist vorgesehen, daß die erste Operationseinheit zwischen der Funktionseinheit zur Unterteilung der Daten eines Videosignals in gleich große Datenblöcke und dem Subtrahierer angeordnet ist, daß die Tiefpaßeinheit mit dem Ausgang des Subtrahierers gekoppelt ist und daß vor dem Addierer eine weitere Tiefpeßeinheit zum Empfang der Datenblöcke vom Bildspeicher, zur Durchführung einer Matrixoperation mit Tiefpaßcharakter der vom Bildspeicher gelieferten Datenblöcke und zur Lieferung der gefilterten Datenblöcke an den Addierer angeordnet ist.

Bei dieser Weiterbildung werden die hohen Frequenzanteile der Datenblöcke vom Bildspeicher durch zwei Tiefpaßeinheiten gedämpft. Zusätzlich bewirkt die Tiefpaßeinheit vor dem Addierer auch eine Bandbegrenzung der von der Funktionseinheit stammenden Datenblöcke. Hierdurch wird ebenfalls das störende Quantisierungsrauschen auf Kosten der Bildschärfe reduziert. Da die erste Operationseinheit, die die Cosinus-Transformation durchführt, zwischen Funktionseinheit und Subtrahierer angeordnet ist, wird keine weitere Operationseinheit im Rückkopplungsweg für eine inverse Cosinus-Transformation benötigt.

Weiter ist ein Hybrid-Decodierer zur Decodierung von von einem Hybrid-Codierer codierten Videosignal vorgesehen. Dieser enthält eine Operationseinheit, die zum Empfang von gleich großen Datenblöcken des Videobildes, zur Durchführung einer inversen Cosinus-Transformation und zur Lieferung von transformierten Datenblöcken vorgesehen ist, eine die transformierten Datenblöcke an einem Eingang empfangenen Addierer, dessen Ausgang über einen Bildspeicher mit seinem anderen Eingang gekoppelt ist, und eine zwischen dem Ausgang des Bildspeichers und dem anderen Eingang des Addierers angeordnete Operationseinheit zur Durchführung einer Matrixoperation mit Tiefpaßcharakter der vom Bildspeicher gelieferten Datenblöcke.

Anhand der Figuren und Beispielen sollen Lösungsvarianten der gestellten Aufgabe näher erläutert werden.

Fig. 1 zeigt einen Hybrid-Codierer nach dem Stand der Technik und

Fig. 2 bis Fig. 4 zeigen Hybrid-Codierer mit erfindungsgemäßen Schaltungsmerkmalen.

In allen Figuren sind funktionsgleiche Einheiten mit gleichen Bezugszeichen versehen.

Fig. 1 ist in der Beschreibungseinleitung ausführlich erläutert worden, so daß hier auf diese Figur nicht nocheinmal eingegangen zu werden braucht.

Fig. 2 unterscheidet sich von der Fig. 1 lediglich durch zwei Operationseinheiten, nämlich T und FTI. Die Bezeichnungen für die restlichen Einheiten sind die gleichen wie in Fig. 1. Die Operationseinheit T liegt zwischen der Operationseinheit F und dem Quantisierer Q, während die Operationseinheit FTI das Ausgangssignal des Bildspeichers BS in dem weiter unten erläuterten Sinne verformt und dann an einen Eingang des Addierers AR weitergibt.

Zur weiteren Erläuterung sei wieder der Einfachheit halber angenommen, daß der Datenblock $\mathbf{b}_{11}$ dem Subtrahierer SR über die Funktionseinheit PP zugeführt wird, während gleichzeitig am Ausgang A des Bildspeichers BS der Datenblock $\underline{\mathbf{b}}_{11}$ anliegt. Der Subtrahierer SR bildet sodann den Differenzblock $\mathbf{d}_{11} = \mathbf{b}_{11} - \underline{\mathbf{b}}_{11}$, der durch die Einheit $\overline{F}$ in den Block $\mathbf{D}_{11} = \mathbf{a}^{-1}\mathbf{d}_{11}\mathbf{a}$ transformiert wird. Die Einheit T, der eine Matrix $\mathbf{h}$ zugeordnet ist, macht daraus den Block $\mathbf{h}^{t}\mathbf{a}^{-1}\mathbf{d}_{11}\mathbf{a}\mathbf{h}$, wobei $\mathbf{h}^{t}$ die zu $\mathbf{h}$ transponierte Matrix bedeutert (vgl. Wigner l.c., S. 23). Mit der Matrix $\mathbf{h}$ wird eine Matrixoperation mit Tiefpaßcharakter vorgenommen; näheres hierzu wird weiter unten gesagt werden. Bis auf eventuelle Quantisierungsfehler (Rundungsfehler) gelangt der zuletzt angegebene Block an die Opertionseinheit IF, die eine zur Transformation der Einheit F inverse Transformation bewirkt; das bedeutet, daß nun der Block $\mathbf{a}\mathbf{h}^{t}\mathbf{a}^{-1}\mathbf{d}_{11}\mathbf{a}\mathbf{h}\mathbf{a}^{-1}$ am Ausgang der Einheit IF erscheint. Wegen der Einheit FTI, deren zugeordnete Matrix zunächst mit $\mathbf{w}$ bezeichnet werde, wird zu dem Block am Ausgang der Einheit IF der Block $\mathbf{w}^{t}\underline{\mathbf{b}}_{11}\mathbf{w}$ durch den Addierer AR addiert; wählt man $\mathbf{w} = \mathbf{a}\mathbf{h}\mathbf{a}^{-1}$, so liegt am Ausgang des Addierer AR der Block $\mathbf{a}\mathbf{h}^{t}\mathbf{a}^{-1}\underline{\mathbf{b}}_{11}\mathbf{a}\mathbf{h}\mathbf{a}^{-1}$ an; wie sich leicht nachprüfen läßt, ist bei dieser Wahl von $\mathbf{w}$ die Wirkung der Operationseinheit FTI auf einen Block die gleiche wie die nacheinander ausgeführten Operationen der Einheiten F, T und IF. Dabei ist zu beachten, daß es sich bei der Matrix $\mathbf{a}$ um eine orthogonale Matrix handelt (vgl. Wigner l.c., S. 24).

Die Deutung der bisher angegebenen Formeln liegt auf der Hand: Mit der Matrix $\mathbf{h}$ wird eine Tiefpaßfilterung der durch die Einheit F transformierten Blöcke vorgenommen, mit der Matrix $\mathbf{w}$ die gleiche Filterung mit den nicht transformierten Blöcken. Die Tiefpaßfilterung durch die Einheiten T und FTI wird also in verschiedenen "Räumen" vorgenommen, nämlich durch die Einheit FTI im Ortsraum (bzw. Ortsbereich) und durch die Einheit T im Wellenzahlraum (bzw. Wellensahlbereich); das akustische Analogon wäre eine Signalumformung im Frequenzbereich (z.B. eine Tiefpaßfilterung) und deren Darstellung im Zeitbereich (als Faltungsintegral). Wegen dieser unterschiedlichen "Räume" sind auch die Transformationsmatrizen - wie oben dargelegt - für die Einheiten T und FTI unterschiedlich, so daß unterschiedliche Matrizen berechnet und abgespeichert werden müssen.

Die tiefpaßgefilterten Blöcke werden in den Bildspeicher BS eingelesen, es wird also ein unscharfes Bild abgespeichert und auch übertragen. Diese Bildungschärfe ist der Preis, der für die Unterdrückung der Quantisierungsfehler zu zahlen ist.

Ist die mit der Tiefpaßfilterung durch die Matrix $\mathbf{h}$ verbundene Grenzfrequenz tief genug, so kann der Quantisierer Q z.B. ein nicht adaptiver Quantisierer sein oder auch ganz entfallen, wenn die Bitraten gering genung sind.

Bei den weiteren Erläuterungen wird angenommen, daß die Operationseinheit F mit Hilfe der Matrix $\mathbf{a}$ eine Cosinus-Transformation (vgl. hierzu z.B. Pratt, W.K.: Digital Image Processing; John Wiley & Sons 1978, S. 242-247) durchführt. Die Matrix $\mathbf{a}$ ist also dem Fachmann in allen Einzelheiten bekannt. Für diesen Sonderfall läßt sich für $\mathbf{h}$ eine besonders einfache Matrix, nämlich eine Diagonalmatrix (vgl. Wigner l.c., S. 8), angeben. Filtermatrizen, die eine Filterung der Blöcke im Ortsbereich (akustisches Analogon: Zeitbereich) vornehmen, haben formal die gleiche Struktur wie folgende Hilfsmatrix $\mathbf{m}$ :

$$m = \begin{bmatrix} 110.\ .\ .\ .\ .\ .\ .\ .\ .\ .\ .\ .\ .\ .0 \\ 1010.\ .\ .\ .\ .\ .\ .\ .\ .\ .\ .\ .0 \\ 01010.\ .\ .\ .\ .\ .\ .\ .\ .\ .\ .0 \\ .\qquad\qquad\qquad\qquad\quad . \\ .\qquad\qquad\qquad\qquad\quad . \\ .\qquad\qquad\qquad\qquad\quad . \\ .\qquad\qquad\qquad\qquad\quad . \\ O.\ .\ .\ .\ .\ .\ .\ .\ .\ .\ .\ .\ .101 \\ O.\ .\ .\ .\ .\ .\ .\ .\ .\ .\ .\ .011 \end{bmatrix}$$

Ab der zweiten Zeile der Matrix **m** sind drei Elemente -hier 1, 0, 1 - mit jeder weiteren Zeile um eine Stelle nach rechts verschoben; alle weiteren Elemente der Zeile sind Null. Die ersten beiden Elemente der ersten Zeile und die letzten beiden Elemente der letzten Zeile bestehen aus Einsen, während auch hier alle anderen Elemente aus Nullen bestehen. Die Zeilenzahl der Matrix **m** (sie stimmt mit der Spaltenzahl überein) ist so groß wie die Zeilenzahl bzw. Spaltenzahl der zu verarbeitenden Blöcke.

Wählt man nun als Matrix **w** die Matrix

$$w = k\ I + \frac{(1-k)}{2}\ m$$

mit **I** als Einheitsmatrix, so ergibt sich für **k** kleiner als 1 jedoch größer oder gleich 0,5 eine ganze Klasse von Filtermatrizen mit Tiefpaßcharakter. Je kleiner **k** ist, umso tiefer liegt die Grenzfrequenz bei der Tiefpaßfilterung. Jede Potenz von **w** ergibt ebenfalls eine Matrix mit Tiefpaßcharakter.

Löst man nun den oben angegebenen Zusammenhang zwischen **w** und **h** nach **h** auf, so ergibt sich für **h** = **a**⁻¹**wa** eine Diagonalmatrix, sofern die Matrix **a** den oben erwähnten Voraussetzungen genügt. Jede Potenz von **w** führt ebenfalls auf eine Diagonalmatrix **h**.

Die Tiefpaßfilterung kann dadurch verfeinert werden, daß die Matrizen **h** und **w** in Abhängigkeit vom Signal verändert werden, die Filterung also adaptiv erfolgt. Dann müssen jedoch für die Decodierung Zusatzinformationen an den Empfänger übertragen werden. Diese Übertragung der Zusatzinformationen ist z.B. durch eine Verbindung der Einheit T mit dem Multiplexer MUX angedeutet. Gleiche Verbindungen bestehen auch zwischen den anderen Einheiten mit Tiefpaßwirkung und dem Multiplexer MUX; sie sind jedoch nicht eingezeichnet. Die Einstellung z.B. der Grenzfrequenzen der Einheiten mit Tiefpaßwirkung ist abhängig vom Füllstand des Pufferspeichers P und vom sogenannten Displacement-Vektor, eine Größe, die den Unterschied zwischen aufeinanderfolgenden Videobildern aufgrund der Bewegung der aufgenommenen Objekte angibt und ebenfalls vom Bildspeicher BS (angedeutet durch die Verbindung der Einheit PP mit dem Bildspeicher BS) bestimmt wird. Angaben über den Füllstand des Pufferspeichers P und die Größe des Displacement-Vektors werden ebenfalls zur ordnungsgemäßen Decodierung an den Empfänger übertragen.

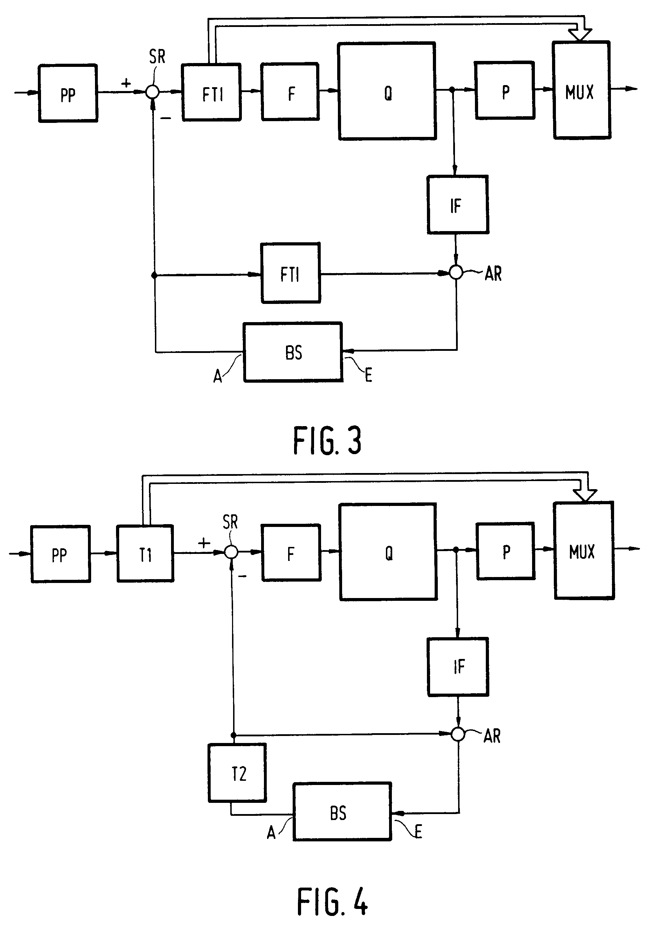

Eine Variante des Hybrid-Codierers nach Fig. 2 zeigt Fig. 3. Bei dieser Variante erfolgt am Ausgang des Subtrahierers SR zuerst die Matrixtransformation mit Tiefpaßcharakter durch eine Operationseinheit FTI und dann die Transformation der Differenzblöcke in den Wellenzahlbereich mit der Einheit F. Die Operationseinheit FTI am Ausgang des Subtrahierers SR nimmt die Tiefpaßfilterung im Ortsraum vor, genauso wie die zweite Einheit FTI, die die Datenblöcke aus dem Bildspeicher BS transformiert und dem Addierer AR zuführt. Diese Variante hat den Vorteil, daß zwei identische Einheiten FTI im Hybrid-Codierer verwendet werden können und daher z.B. nur eine Transformationsmatrix abgespeichert zu werden braucht.

Eine andere, jedoch nicht abgebildete Variante mit dem gleichen Vorteil besteht darin, bei einer Schaltung nach Fig. 2 die Operationseinheit F, die die Fourier-Transformation der Datenblöcke vornimmt, unmittelbar auf die Einheit PP folgen zu lassen, also dem Subtrahierer SR schon transformierte Blöcke zuzuführen. Dann ist an die Stelle der Einheit FTI eine weitere Einheit T zu setzen, während die Einheit IF entfällt. In der Schleife werden auf diese Weise nur Signale im Wellenzahlraum verarbeitet.

Nach Fig. 4 erfolgt die Tiefpaßfilterung der Blöcke des Videosignals durch eine Einheit T1 vor der Differenzbildung durch den Subtrahierer SR. Eine weitere Einheit T2 folgt unmittelbar auf den Ausgang des Bildspeichers BS. Beide Einheiten T1 und T2 nehmen die Tiefpaßfilterung im Ortsraum vor, enthalten also Matrizen, die formal mit der oben angegebenen Matrix **w** oder Potenzen davon übereinstimmen.

Die Einstellung oder Steuerung des Grenzfrequenzen der Einheiten T1 und T2 erfolgt - wie auch bei den anderen Varianten mit zwei Tiefpaßeinheiten - zunächst so, daß einander entsprechende Datenblöcke die gleiche Filterung erfahren; bei beiden Tiefpaßeinheiten sind die Grenzfrequenzen also gleich.

Bei der Variante nach Fig. 4 läßt sich eine weitere Verbesserung der Qualität der übertragenen Bilder ohne Erhöhung der Übertragungsbitrate erreichen, wenn die Tiefpaßwirkung der Einheit T1 geringer ist als die Tiefpaßwirkung der Einheit T2. Geringere Tiefpaßwirkung bedeutet z.B. eine höhere Grenzfrequenz; die Tiefpaßwirkung einer Einheit wird Null, wenn die Grenzfrequenz unendlich groß wird. Auch bei einer Steuerung der Grenzfrequenzen der Einheiten T1 und T2 z.B. durch den Displacement-Vektor ist die Grenzfrequenz der Einheit T1 immer größer als die Grenzfrequenz der Einheit T2 zu wählen.

Es soll nun plausibel gemacht werden, daß sich bei einer solchen Bemessung der Einheiten T1 und T2 eine Verbesserung der Bildqualität gegenüber dem Fall ergibt, in dem beide Einheiten gleich bemessen sind. Zu diesem Zweck sei zunächst angenommen, daß beide Einheiten T1 und T2 wirkungslos sind, also unendlich große Grenzfrequenzen haben. Für die weitere Argumentation ist folgende, empirisch gefundene Tatsache von Bedeutung:
Führt man mit den von der Einheit PP kommenden Datenblöcken die oben erwähnte spezielle, flächenhafte Fourier-Transformation durch und führt die gleiche Transformation auch mit den Datenblöcken durch, die vom Bildspeicher BS kommen, so stellt man fest, daß zwischen den Koerrizienten, die zu hohen Frequenzen (besser: Wellenzahlen) und sich einander entsprechenden Datenblöcken gehören, nur eine geringe Korrelation besteht. Die hohen Frequenzanteile der Blöcke, die von der Einheit PP kommen, sind also statistisch unabhängig von den hohen Frequenzanteilen der Datenblöcke, die vom Bildspeicher BS kommen. Da jedoch der Subtrahierer SR die Differenz beider Blöcke bildet, und der Differenzblock durch die Einheit F Fouriertransformiert wird, ergeben sich für die hohen Frequenzanteile der Differenzblöcke - wegen der statistischen Unabhängigkeit der Summanden - größere Werte als für jeden der Blöcke alleine.

Deshalb wird der hohe Frequenzanteil der Blöcke, die aus dem Bildspeicher BS kommen, durch die Einheit T2 - die nun eine endliche Grenzfrequenz hat - gedämpft. Dadurch wird die Bildqualität auf der Empfängerseite verbessert, weil für die Codierung auf der Senderseite ungeeignete Bildanteile nich mehr verwendet werden. Das führt unter anderem zu einer geringeren Zahl der für die Codierung der Differenzblöcke erforderlichen Bits.

Davon unabhängig wird eine Bandbegrenzung des zu codierenden Signals durch die Operationseinheit T1 vorgenommen. Sie hat so zu erfolgen, daß die Grenzfrequenz der wie ein Tiefpaß wirkenden Einheit T1 über der Grenzfrequenz der Einheit T2 liegt. Die Bandbegrenzung der von der Einheit PP kommenden Blöcke reduziert das störende Quantisierungsrauschen auf Kosten der Bildschärfe; dieser Nachteil ist jedoch weniger störend.

Die Tiefpaßcharakteristik der Einheit T2 wird sowohl aus dem Grad der Korrelation zwischen den Koeffizienten der von der Einheit PP und der vom Bildspeicher BS kommenden Blöcke als auch aus der Tiefpaßcharakteristik der Einheit T1 bestimmt.

Auf der Empfängerseite werden die Blöcke zur Decodierung in ähnlicher Weise wie bei der Decodierung durch einen Hybrid-Decodierer umgeformt und zwar besteht eine erfindungsgemäße Variante eines Hybrid-Decodierers im wesentlichen aus einem Teil der entsprechenden Variante des Hybrid-Codierers. Ein Hybrid-Decodierer enthält alle Einheiten, die in der Rückkopplungsschleife des entsprechenden Hybrid-Codierers liegen. Bei einer Variante nach Fig. 2 z.B. enthält der Hybrid-Decodierer neben einem Eingangspufferspeicher eine Einheit IF zur Rücktransformation der Datenblöcke in den Ortsraum, einen Addierer AR einen Bildspeicher BS und eine Operationseinheit FTI zur Filterung; alle diese Einheiten sind in der gleichen Weise miteinander verbunden, wie die entsprechenden Einheiten des Hybrid-Codierers nach Fig. 2. Der Ausgang des Addierers AR auf der Empfängerseite ist gleichzeitig der Ausgang des Hybrid-Decodierers. Die hier anliegenden Blöcke werden noch einer Nachbehandlung unterzogen, die im wesentlichen die Auflösung der Blockstruktur beinhaltet, damit das Signal auf einem Monitor als Folge von Videobildern sichtbar gemacht werden kann.

Entsprechendes gilt für Hybrid-Decodierer der Varianten, die in Fig. 3 und Fig. 4 abgebildet sind.

# EP 0 244 001 B1

**Patentansprüche**

1. Hybrid-Codierer für Videosignale
   - mit einer Funktionseinheit (PP) zur Unterteilung der Daten eines Videobildes in gleich große Datenblöcke,
   - mit einem Subtrahierer (SR) zur Subtraktion jedes von der Funktionseinheit (PP) gelieferten Datenblockes von einem entsprechenden, über einen Rückkopplungsweg geführten aus dem vorherigen Videobild abgeleiteten Datenblock,
   - mit einer ersten Operationseinheit (F) zur Durchführung einer Cosinus-Transformation, die mit dem Ausgang oder dem Eingang des ein Differenzbild liefernden Subtrahierers (SR) gekoppelt ist,
   - mit einem im Rückkopplungsweg enthaltenen zur Speicherung von Datenblöcken vorgesehenen Bildspeicher (BS), der einerseits mit dem Subtrahierer (SR) und andererseits mit einem Addierer (AR) zur Addition der über den Rückkopplungsweg gegebenen Datenblöcke mit entsprechenden aus dem Bildspeicher (BS) abgeleiteten Datenblöcken gekoppelt ist,
   
   dadurch gekennzeichnet,
   daß mit dem Bildspeicher (BS) Mittel (T, FTI; FTI, FTI; T2) gekoppelt sind, die zur Durchführung einer Matrixoperation mit Tiefpaßcharakter der von dem Bildspeicher (BS) gelieferten Datenblöcke vorgesehen ist.

2. Hybrid-Codierer nach Anspruch 1,
   dadurch gekennzeichnet,
   daß eine mit der ersten, dem Subtrahierer nachgeschaltete Operationseinheit (F) gekoppelte, im Rückkopplungsweg enthaltene zweite Operationseinheit (IF) zur Durchführung einer inversen Cosinus-Transformation vor dem Addierer (AR) angeordnet ist,
   daß zwischen Addierer (AR) und dem Eingang (E) des Bildspeicher (BS) oder unmittelbar hinter dem Ausgang (A) des Bildspeichers (BS) eine Tiefpaßeinheit (T2) angeordnet ist und
   daß zwischen der Funktionseinheit (PP) zur Unterteilung der Daten eines Videobildes in gleich große Datenblöcke und dem Subtrahierer (SR) eine weitere Tiefpaßeinheit (T1) zur Durchführung einer Matrixoperation mit Tiefpaßcharakter der Datenblöcke des Videobildes angeordnet ist.

3. Hybrid-Codierer nach Anspruch 2,
   dadurch gekennzeichnet,
   daß die Tiefpaßwirkung der Tiefpaßeinheit (T1), die zwischen der Funktionseinheit (PP) und dem Subtrahierer (SR) liegt, geringer ist als die Tiefpaßwirkung der Tiefpaßeinheit (T2), die zwischen Addierer (AR) und Bildspeicher (BS) oder unmittelbar hinter dem Ausgang des Bildspeichers (BS) angeordnet ist.

4. Hybrid-Codierer nach Anspruch 1,
   dadurch gekennzeichnet,
   daß eine mit der ersten, dem Subtrahierer nachgeschaltete Operationseinheit (F) gekoppelte, im Rückkopplungsweg enthaltene zweite Operationseinheit (IF) zur Durchführung einer inversen Cosinus-Transformation vor dem Addierer (AR) angeordnet ist,
   daß direkt hinter der ersten Operationseinheit (F) eine Tiefpaßeinheit (T) angeordnet ist und
   daß vor dem Addierer (AR) eine vierte Operationseinheit (FTI) zum Empfang der Datenblöcke vom Bildspeicher (BS), zur Durchführung einer Matrixoperation mit Tiefpaßcharakter der vom Bildspeicher (BS) gelieferten Datenblöcke und zur Lieferung der gefilterten Datenblöcke an den Addierer (AR) angeordnet ist.

5. Hybrid-Codierer nach Anspruch 4,
   dadurch gekennzeichnet,
   daß die Matrix der Tiefpaßeinheit (T), die zur Durchführung einer Matrixoperation mit Tiefpaßcharakter vorgesehen ist, eine Diagonalmatrix ist.

6. Hybrid-Decodierer nach Anspruch 4 oder 5,
   dadurch gekennzeichnet,
   daß die Matrizen der Tiefpaßeinheit und der vierten Operationseinheit (F, FTI) adaptiv verändert werden.

EP 0 244 001 B1

**7.** Hybrid-Codierer nach Anspruch 1,
dadurch gekennzeichnet,
daß eine mit der ersten, dem Subtrahierer nachgeschaltete Operationseinheit (F) gekoppelte, im Rückkopplungsweg enthaltene zweite Operationseinheit (IF) zur Durchführung einer inversen Cosinus-Transformation vor dem Addierer (AR) angeordnet ist,
daß zwischen dem Subtrahierer und der ersten Operationseinheit (F) eine Tiefpaßeinheit (FTI) angeordnet ist und daß vor dem Addierer (AR) eine weitere Operationseinheit (FTI) zum Empfang der Datenblöcke vom Bildspeicher (BS), zur Durchführung einer Matrixoperation mit Tiefpaßcharakter der vom Bildspeicher (BS) gelieferten Datenblöcke und zur Lieferung der gefilterten Datenblöcke an den Addierer (AR) angeordnet ist.

**8.** Hybrid-Codierer nach Anspruch 2, 3 oder 7,
dadurch gekennzeichnet,
daß die Wirkungsweise der Operationseinheiten mit Tiefpaßcharakter (FTI, T1, T2) in Abhängigkeit vom Füllstand eines mit dem Ausgang der ersten Operationseinheit (F) gekoppelten Pufferspeichers (P) oder in Abhängigkeit vom Displacement-Vektor oder in Abhängigkeit von beidem verändert wird.

**9.** Hybrid-Codierer nach Anspruch 1,
dadurch gekennzeichnet,
daß die erste Operationseinheit (F) zwischen der Funktionseinheit (PP) zur Unterteilung der Daten eines Videosignals in gleich große Datenblöcke und dem Subtrahierer (SR) angeordnet ist,
daß die Tiefpaßeinheit (T) mit dem Ausgang des Subtrahierers (SR) gekoppelt ist und
daß vor dem Addierer (AR) eine weitere Tiefpaßeinheit (T) zum Empfang der Datenblöcke vom Bildspeicher (BS), zur Durchführung einer Matrixoperation mit Tiefpaßcharakter der vom Bildspeicher (BS) gelieferten Datenblöcke und zur Lieferung der gefilterten Datenblöcke an den Addierer (AR) angeordnet ist.

**10.** Hybrid-Decodierer zur Decodierung von von einem Hybrid-Codierer nach einem der Ansprüche 1 bis 9 codierten Videosignal
- mit einer Operationseinheit (IF), die zum Empfang von gleich großen Datenblöcken des Videobildes, zur Durchführung einer inversen Cosinus-Transformation und zur Lieferung von transformierten Datenblöcken vorgesehen ist, und
- mit einem die transformierten Datenblöcke an einem Eingang empfangenen Addierer (AR), dessen Ausgang über einen Bildspeicher (BS) mit seinem anderen Eingang gekoppelt ist,
dadurch gekennzeichnet,
daß zwischen dem Ausgang (A) des Bildspeichers (BS) und dem anderen Eingang des Addierers (AR) eine Operationseinheit zur Durchführung einer Matrixoperation mit Tiefpaßcharakter der vom Bildspeicher (BS) gelieferten Datenblöcke vorgesehen ist.

## Claims

**1.** A hybrid encoder for video signals, comprising
- a pre-processing unit (PP) for dividing the data of a video picture into equally large data blocks,
- a subtracter (SR) for subtracting each data block supplied by the pre-processing unit (PP) from a corresponding data block derived from the previous video picture and supplied *via* a feedback path,
- a first processing unit (F) for performing a cosine transform, which unit is coupled to the output or the input of the subtracter (SR) supplying a difference picture,
- a picture store (BS) provided in the feedback path for storing data blocks, which store is coupled to the subtracter (SR) and to an adder (AR) for adding the data blocks supplied *via* the feedback path to corresponding data blocks derived from the picture store (BS),
characterized in that means (T, FTI; FTI, FTI; T2) are coupled to the picture store (BS), which are provided for performing a matrix operation having a low-pass character of the data blocks supplied by the picture store (BS).

**2.** A hybrid encoder as claimed in Claim 1,
characterized in that a second processing unit (IF) arranged in the feedback path and coupled to the first processing unit (F) succeeding the subtracter precedes the adder (AR) for performing an inverse

9

cosine transform, in that a low-pass unit (T2) is arranged between the adder (AR) and the input (E) of the picture store (BS) or directly behind the output (A) of the picture store (BS), and in that a further low-pass unit (T1) for performing a matrix operation having a low-pass character of the data blocks of the video picture is arranged between the pre-processing unit (PP) for dividing the data of a video picture into equally large data blocks and the subtracter (SR).

**3.** A hybrid encoder as claimed in Claim 2,
characterized in that the low-pass operation of the low-pass unit (T1), which is arranged between the pre-processing unit (PP) and the subtracter (SR), is smaller than the low-pass operation of the low-pass unit (T2) which is arranged between the adder (AR) and the picture store (BS) or directly behind the output of the picture store (BS).

**4.** A hybrid encoder as claimed in Claim 1,
characterized in that a second processing unit (IF) arranged in the feedback path and coupled to the first processing unit (F) succeeding the subtracter precedes the adder (AR) for performing an inverse cosine transform, in that a low-pass unit (T) is arranged directly behind the first processing unit (F), and in that a fourth processing unit (FTI) for receiving the data blocks from the picture store (BS) precedes the adder (AR) for performing a matrix operation having a low-pass character of the data blocks supplied by the picture store (BS) and for supplying the filtered data blocks to the adder (AR).

**5.** A hybrid encoder as claimed in Claim 4,
characterized in that the matrix of the low-pass unit (T) arranged for performing a matrix operation having a low-pass character is a diagonal matrix.

**6.** A hybrid encoder as claimed in Claim 4 or 5,
characterized in that the matrices of the low-pass unit and the fourth processing unit (F, FTI) are varied adaptively.

**7.** A hybrid encoder as claimed in Claim 1,
characterized in that a second processing unit arranged in the feedback path and coupled to the first processing unit (F) succeeding the subtracter precedes the adder (AR) for performing an inverse cosine transform, in that a low-pass unit (FTI) is arranged between the subtracter and the first processing unit (F), and in that a further processing unit (FTI) for receiving data blocks from the picture store (BS) precedes the adder (AR) for performing a matrix operation having a low-pass character of the data blocks supplied by the picture store (BS) and for supplying the filtered data blocks to the adder (AR).

**8.** A hybrid encoder as claimed in Claim 2, 3 or 7,
characterized in that the operation of the processing units having a low-pass character (FTI, T1, T2) is varied in dependence upon the filling level of a buffer store (P) coupled to the output of the first processing unit (F), or in dependence upon the displacement vector, or in dependence upon both.

**9.** A hybrid encoder as claimed in Claim 1,
characterized in that the first processing unit (F) is arranged between the pre-processing unit (PP) for dividing the data of a video signal into equally large data blocks and the subtracter (SR), in that the low-pass unit (T) is coupled to the output of the subtracter (SR), and in that a further low-pass unit (T) for receiving the data blocks from the picture store (BS) precedes the adder (AR) for performing a matrix operation having a low-pass character of the data blocks supplied by the picture store (BS) and for supplying the filtered data blocks to the adder (AR).

**10.** A hybrid decoder for decoding a video signal encoded by a hybrid encoder as claimed in any one of Claims 1 to 9, comprising
   - a processing unit (IF) which is provided for receiving equally large data blocks of the video picture for performing an inverse cosine transform and for supplying transformed data blocks, and
   - an adder (AR) receiving the transformed data blocks at an input, while its output is coupled to its other input *via* a picture store (BS),
characterized in that a processing unit for performing a matrix operation having a low-pass character of the data blocks supplied by the picture store (BS) is arranged between the output (A) of the picture store (BS) and the other input of the adder (AR).

10

# EP 0 244 001 B1

**Revendications**

1. Codeur hybride pour signaux vidéo comportant :
   - une unité fonctionnelle (PP) pour subdiviser les données d'une image vidéo en blocs de données de même taille,
   - un soustracteur (SR) pour soustraire chaque bloc de données fourni par l'unité fonctionnelle (PP) d'un bloc de données correspondant tiré de l'image vidéo précédente et passant par une voie de rétroaction,
   - une première unité opérationnelle (F) pour réaliser une transformation cosinus, qui est couplée à la sortie ou à l'entrée du soustracteur (SR) qui fournit une image différentielle,
   - une mémoire d'images (BS) contenue dans la voie de rétroaction et prévue pour mémoriser des blocs de données, cette mémoire d'images étant couplée d'une part au soustracteur (SR) et d'autre part à un additionneur (AR) pour additionner les blocs de données obtenus via la voie de rétroaction à des blocs de données correspondants tirés de la mémoire d'images (BS),
   caractérisé en ce que l'on couple à la mémoire d'images (BS) des moyens (T, FTI; FTI, FTI; T2) qui permettent d'effectuer une opération matricielle à caractère passe-bas sur les blocs de données fournis par la mémoire d'images (BS).

2. Codeur hybride selon la revendication 1, caractérisé en ce qu'on installe en amont de l'additionneur (AR), une deuxième unité opérationnelle (IF) contenue dans la voie de rétroaction et couplée à la première unité opérationnelle (F) connectée en aval du soustracteur afin de réaliser une transformation cosinus inverse, on installe entre l'additionneur (AR) et l'entrée de la mémoire d'images (BS) ou directement derrière la sortie de la mémoire d'images (BS), une unité passe-bas (T2), et on installe entre l'unité fonctionnelle (PP) permettant de subdiviser les données d'une image vidéo en blocs de données de même taille et le soustracteur (SR), une autre unité passe-bas (T1) afin de réaliser une opération matricielle à caractère passe-bas sur les blocs de données de l'image vidéo.

3. Codeur hybride selon la revendication 2, caractérisé en ce que l'action passe-bas de l'unité passe-bas (T1), qui se trouve entre l'unité fonctionnelle (PP) et le soustracteur (SR), est moindre que l'action passe-bas de l'unité passe-bas (T2) qui est installée directement derrière la sortie de la mémoire d'images (BS).

4. Codeur hybride selon la revendication 1, caractérisé en ce qu'on installe en amont de l'additionneur (AR) une deuxième unité opérationnelle (IF) contenue dans la voie de rétroaction et couplée à la première unité opérationnelle (F) connectée en aval du soustracteur (SR) afin de réaliser une transformation cosinus inverse, on installe directement derrière la première unité opérationnelle (F) une unité passe-bas (T) et on installe en amont de l'additionneur (AR) une quatrième unité opérationnelle (FTI) afin de recevoir les blocs de données de la mémoire d'images (BS), de réaliser une opération matricielle à caractère passe-bas sur les blocs de données délivrés par la mémoire d'images (BS) et de fournir les blocs de données filtrés à l'additionneur (AR).

5. Codeur hybride selon la revendication 4, caractérisé en ce que la matrice de l'unité passe-bas (T), qui est prévue pour réaliser une opération matricielle à caractère passe-bas, est une matrice diagonale.

6. Décodeur hybride selon la revendication 4 ou 5, caractérisé en ce que les matrices de l'unité passe-bas et de la quatrième unité opérationnelle (F, FTI) sont modifiées de manière adaptative.

7. Codeur hybride selon la revendication 1, caractérisé en ce qu'on installe en amont de l'additionneur (AR) une deuxième unité opérationnelle (IF) contenue dans la voie de rétroaction et couplée à la première unité opérationnelle (F) connectée en aval du soustracteur pour réaliser une transformation cosinus inverse, on installe entre le soustracteur (RS) et la première unité opérationnelle (F) une unité passe-bas (FTI) et on installe en amont de l'additionneur (AR) une autre unité opérationnelle (FTI) afin de recevoir les blocs de données de la mémoire d'images (BS), de réaliser une opération matricielle à caractère passe-bas sur les blocs de données délivrés par la mémoire d'images (BS) et de fournir les blocs de données filtrés à l'additionneur (AR).

8. Codeur hybride selon la revendication 2, 3 ou 7, caractérisé en ce que le mode de fonctionnement des unités opérationnelles à caractère passe-bas (FTI, T1, T2) est modifié en fonction de l'état de

11

**EP 0 244 001 B1**

remplissage d'une mémoire tampon (P) couplée à la sortie de la première unité opérationnelle (F) ou en fonction du vecteur de déplacement ou en fonction des deux.

9. Codeur hybride selon la revendication 1, caractérisé en ce qu'on installe la première unité opérationnelle (F) entre l'unité fonctionnelle (PP) servant à subdiviser les données d'un signal vidéo en blocs de données de même taille et le soustracteur (SR), on couple l'unité passe-bas (T) à la sortie du soustracteur (SR) et on installe en amont de l'additionneur (AR) une autre unité passe-bas (T) afin de recevoir les blocs de données de la mémoire d'images (BS), de réaliser une opération matricielle à caractère passe-bas sur les blocs de données délivrés par la mémoire d'images (BS) et de fournir les blocs de données filtrés à l'additionneur (AR).

10. Décodeur hybride pour le décodage d'un signal vidéo codé par un codeur hybride selon l'une quelconque des revendications 1 à 9, comprenant une unité opérationnelle (IF) qui est prévue pour recevoir des blocs de données de même taille de l'image vidéo, réaliser une transformation cosinus inverse et délivrer les blocs de données transformés, et un additionneur (AR) recevant les blocs de données transformés à une entrée, dont la sortie est couplée à son autre entrée via une mémoire d'images (BS), caractérisé en ce qu'une unité opérationnelle est installée entre la sortie de la mémoire d'images (BS) et l'autre entrée de l'additionneur (AR) pour réaliser une opération matricielle à caractère passe-bas sur les blocs de données fournis par la mémoire d'images (BS).

FIG.1

FIG. 2

EP 0 244 001 B1

FIG. 3

FIG. 4

14